# EUROPEAN PATENT APPLICATION

(11) **EP 4 832 198 A1**
(43) Date of publication of application: **28.10.2026**
(21) Application number: 24927976.1
(22) Date of filing: 30.07.2024
(51) Int. Cl.: H01M 50/244

(54) **CASE, BATTERY, AND ELECTRIC DEVICE**

(30) Priority: 06.03.2024 CN 202410256652
(71) Applicant: Contemporary Amperex Technology Co., Limited, Ningde, Fujian 352100 (CN)
(72) Inventor: GUO, Xinfei, Ningde, Fujian 352100 (CN)
(74) Representative: Ran, Handong
(86) International application number: PCT/CN2024/108644
(87) International publication number: WO 2025/185043

(57) **Abstract**

A case (10), a battery (100), and an electric device. The case (10) comprises a plate assembly (111). The plate assembly (111) comprises a first plate member (1111) and a second plate member (1112) that are stacked. The first plate member (1111) comprises a first plate body (11111) and a first frame edge portion (11112) connected to a side edge of the first plate body (11111). The second plate member (1112) comprises a second plate body (11121) and a second frame edge portion (11122) connected to a side edge of the second plate body (11121). The first frame edge portion (11112) is connected to the second frame edge portion (11122) to form a first edge beam structure (112). The first edge beam structure (112) defines an accommodating space (114) for accommodating a battery cell (20).

## Description

### CROSS-REFERENCE

The present application refers to Chinese Patent Application No. 202410256652.5, filed on March 6, 2024 and entitled "CASE, BATTERY, AND ELECTRIC DEVICE", which is incorporated herein by reference in its entirety.

### TECHNICAL FIELD

The present application relates to the technical field of batteries, and in particular, to a case, a battery, and an electric device.

### BACKGROUND

Energy conservation and emission reduction are the key to the sustainable development of the automobile industry. Electric vehicles have become an important part of the sustainable development of the automobile industry due to their energy conservation and environmental protection advantages. For the electric vehicles, the battery technology is a crucial factor in their development.

The battery generally includes a case and battery cells, the battery cells are accommodated in the case, and the case provides a protective effect on the battery cells. However, the case has a large number of components, resulting in long assembly time and low assembly efficiency.

### SUMMARY

One of the objectives of embodiments of the present application is to provide a case, a battery, and an electric device, aiming to solve the technical problem of a large number of components in the case that result in long assembly time and low assembly efficiency in the related art.

To solve the above technical problem, the technical solution adopted in the embodiments of the present application is as follows: A case is provided, which includes a plate assembly, where the plate assembly includes a first plate member and a second plate member that are disposed in a stacked manner, the first plate member includes a first plate body and a first frame edge part connected to an edge side of the first plate body, the second plate member includes a second plate body and a second frame edge part connected to an edge side of the second plate body, the first frame edge part is connected to the second frame edge part to form a first edge beam structure, and the first edge beam structure defines an accommodating space for accommodating a battery cell.

The beneficial effects of the case according to the embodiments of the present application are as follows: According to the plate assembly in the case provided in the embodiments of the present application, the first frame edge part and the second frame edge part are directly provided on the first plate member and the second plate member, respectively, and the first edge beam structure is formed by connecting the first frame edge part to the second frame edge part. In this way, the edge beam structure is directly formed on the plate assembly, such that the plate assembly is connected to the edge beam structure without using additional fasteners, which effectively reduces the number of components in the case, thereby effectively simplifying the assembly process of the case and improving the assembly efficiency of the case.

In some embodiments of the present application, the first frame edge part includes a first steel layer body, and the first steel layer body constitutes at least a part of the first edge beam structure.

By adopting the above technical solution, the structural strength of the first edge beam structure is effectively improved.

In some embodiments of the present application, the first frame edge part further includes two first aluminum layer bodies connected to the first plate body, and the two first aluminum layer bodies cooperatively clamp the first steel layer body in a stacking direction of the first plate member and the second plate member.

By adopting the above technical solution, the weight of the first plate member is effectively reduced, thereby effectively improving the mass energy density of the battery.

In some embodiments of the present application, the first plate body is an aluminum plate.

By adopting the above technical solution, not only is the connection between the first frame edge part and the first plate body facilitated, which effectively improves the connection strength between the first frame edge part and the first plate body, but also the weight of the first plate member is further reduced, thereby further improving the mass energy density of the battery.

In some embodiments of the present application, the second frame edge part includes a second steel layer body, and the second steel layer body constitutes at least a part of the first edge beam structure.

By adopting the above technical solution, the structural strength of the first edge beam structure is effectively improved.

In some embodiments of the present application, the second frame edge part further includes two second aluminum layer bodies connected to the second plate body, and the two second aluminum layer bodies cooperatively clamp the second steel layer body in the stacking direction of the first plate member and the second plate member.

By adopting the above technical solution, the weight of the second plate member is effectively reduced, thereby effectively improving the mass energy density of the battery.

In some embodiments of the present application, the second plate body is an aluminum plate.

By adopting the above technical solution, not only is the connection between the second frame edge part and the second plate body facilitated, which effectively improves the connection strength between the second frame edge part and the second plate body, but also the weight of the second plate member is further reduced, thereby further improving the mass energy density of the battery.

In some embodiments of the present application, the first plate member further includes a third frame edge part, the first frame edge part is connected to one side of the first plate body in a first direction, and the third frame edge part is connected to one side of the first plate body in a second direction; the second plate member further includes a fourth frame edge part, the second frame edge part is connected to one side of the second plate body in the first direction, and the fourth frame edge part is connected to one side of the second plate body in the second direction; the third frame edge part is connected to the fourth frame edge part to form a second edge beam structure, and the second edge beam structure and the first edge beam structure jointly define the accommodating space, where the first direction and the second direction intersect with each other and are perpendicular to the stacking direction of the first plate member and the second plate member.

By adopting the above technical solution, the plate assembly can be connected to the second edge beam structure without using fasteners, which effectively reduces the number of components in the case, thereby effectively simplifying the assembly process of the case and improving the assembly efficiency of the case.

In some embodiments of the present application, two first frame edge parts, two second frame edge parts, two third frame edge parts, and two fourth frame edge parts are provided; the two first frame edge parts are respectively disposed on two opposite sides of the first plate body in the first direction, the two second frame edge parts are respectively disposed on two opposite sides of the second plate body in the first direction, and the two first frame edge parts are disposed in one-to-one correspondence with the two second frame edge parts to form two first edge beam structures; the two third frame edge parts are respectively disposed on two opposite sides of the first plate body in the second direction, the two fourth frame edge parts are respectively disposed on two opposite sides of the second plate body in the second direction, and the two third frame edge parts are disposed in one-to-one correspondence with the two fourth frame edge parts to form two second edge beam structures; the two first edge beam structures and the two second edge beam structures define, in an enclosing manner, the accommodating space.

By adopting the above technical solution, the formation of the outer frame of the case is facilitated, such that the plate assembly is connected to the outer frame without using fasteners, which effectively reduces the number of components in the case, thereby effectively simplifying the assembly process of the case and improving the assembly efficiency of the case.

In some embodiments of the present application, the third frame edge part includes a third steel layer body, and the third steel layer body constitutes at least a part of the second edge beam structure.

By adopting the above technical solution, the structural strength of the second edge beam structure is effectively improved.

In some embodiments of the present application, the third frame edge part further includes two third aluminum layer bodies connected to the first plate body, and the two third aluminum layer bodies cooperatively clamp the third steel layer body in the stacking direction of the first plate member and the second plate member.

By adopting the above technical solution, the weight of the first plate member is effectively reduced, thereby effectively improving the mass energy density of the battery.

In some embodiments of the present application, the fourth frame edge part includes a fourth steel layer body, and the fourth steel layer body constitutes at least a part of the second edge beam structure.

By adopting the above technical solution, the structural strength of the second edge beam structure is effectively improved.

In some embodiments of the present application, the fourth frame edge part further includes two fourth aluminum layer bodies connected to the second plate body, and the two fourth aluminum layer bodies cooperatively clamp the fourth steel layer body in the stacking direction of the first plate member and the second plate member.

By adopting the above technical solution, the weight of the second plate member is effectively reduced, thereby effectively improving the mass energy density of the battery.

In some embodiments of the present application, the case further includes a third plate member disposed in a stacked manner between the first plate member and the second plate member, the third plate member includes a third plate body and a fifth frame edge part connected to an edge side of the third plate body, and the fifth frame edge part extends to an inner cavity of the first edge beam structure and is connected between the first frame edge part and the second frame edge part.

By adopting the above technical solution, the structural strength of the first edge beam structure is further improved.

In some embodiments of the present application, the fifth frame edge part includes a fifth steel layer body, and the fifth steel layer body extends to the inner cavity of the first edge beam structure.

By adopting the above technical solution, the structural strength of the first edge beam structure is further improved.

In some embodiments of the present application, the fifth frame edge part further includes two fifth aluminum layer bodies connected to the third plate body, and the two fifth aluminum layer bodies cooperatively clamp the fifth steel layer body in the stacking direction of the first plate member and the second plate member.

By adopting the above technical solution, the weight of the third plate member is effectively reduced, thereby effectively improving the mass energy density of the battery.

In some embodiments of the present application, the third plate body is an aluminum plate.

By adopting the above technical solution, not only is the connection between the fifth frame edge part and the third plate body facilitated, which effectively improves the connection strength between the fifth frame edge part and the third plate body, but also the weight of the third plate member is further reduced, thereby further improving the mass energy density of the battery.

In some embodiments of the present application, the second plate body is disposed on one side, facing away from the accommodating space, of the third plate member; one side, facing the third plate member, of the second plate body is provided with a gas guiding channel, the gas guiding channel is in communication with an external environment of the case, a through hole is formed at a junction between the first plate body and the third plate body, and the gas guiding channel is in communication with the accommodating space via the through hole.

By adopting the above technical solution, the second plate member can be used as a gas guiding plate, which facilitates discharge of gas from the accommodating space of the case to the outside in the case that the battery undergoes thermal runaway.

In some embodiments of the present application, the first plate body is connected to the third plate body to form a heat exchange channel, and the heat exchange channel is configured to accommodate a heat exchange medium to adjust a temperature of the battery cell.

By adopting the above technical solution, the first plate body can be connected to the third plate body to form a heat exchange plate, which facilitates heat exchange of the battery cell accommodated in the accommodating space, so as to regulate the temperature of the battery cell.

In some embodiments of the present application, the first frame edge part is welded to the fifth frame edge part; and/or the second frame edge part is welded to the fifth frame edge part.

By adopting the above technical solution, the connection between the first frame edge part and/or the second frame edge part and the fifth frame edge part is facilitated.

The embodiments of the present application further provide a battery. The battery includes the case according to any one of the above embodiments.

The beneficial effects of the battery according to the embodiments of the present application are as follows: The battery according to the embodiments of the present application uses the battery cell according to any one of the above embodiments, such that the number of components in the battery is effectively reduced, thereby effectively simplifying the assembly process of the battery and improving the assembly efficiency of the battery.

The embodiments of the present application further provide an electric device. The electric device includes the above battery.

The beneficial effects of the electric device according to the embodiments of the present application are as follows: The electric device according to the embodiments of the present application uses the above battery, such that the number of components in the electric device is effectively reduced, thereby effectively simplifying the assembly process of the electric device and improving the assembly efficiency of the electric device.

### BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic exploded structural diagram of a battery in the vehicle shown in FIG. 1;
FIG. 3 is a schematic structural diagram of a first part of a case in the battery shown in FIG. 2;
FIG. 4 is a schematic top structural diagram of the first part of the case shown in FIG. 3;
FIG. 5 is a schematic diagram of a cross-sectional structure, in a direction of line A-A, of the first part of the case shown in FIG. 4;
FIG. 6 is an enlarged schematic structural diagram of portion C of the first part of the case shown in FIG. 5;
FIG. 7 is an enlarged schematic structural diagram of portion D of the first part of the case shown in FIG. 5;
FIG. 8 is an enlarged schematic structural diagram of portion E of the first part of the case shown in FIG. 5;
FIG. 9 is a schematic diagram of a cross-sectional structure, in a direction of line B-B, of the first part of the case shown in FIG. 4;
FIG. 10 is an enlarged schematic structural diagram of portion F of the first part of the case shown in FIG. 9; and
FIG. 11 is an enlarged schematic structural diagram of portion G of the first part of the case shown in FIG. 9.

### Description of the reference numerals:

1000: vehicle;
100: battery; 10: case; 11: first part; 111: plate assembly; 1111: first plate member; 11111: first plate body; 11112: first frame edge part; 11113: first steel layer body; 11114: first aluminum layer body; 11115: third frame edge part; 11116: third steel layer body; 11117: third aluminum layer body; 1112: second plate member; 11121: second plate body; 11122: second frame edge part; 11123: second steel layer body; 11124: second aluminum layer body; 11125: fourth frame edge part; 11126: fourth steel layer body; 11127: fourth aluminum layer body; 11128: gas guiding channel; 11129: through hole; 1113: third plate member; 11131: third plate body; 11132: fifth frame edge part; 11133: fifth steel layer body; 11134: fifth aluminum layer body; 11135: heat exchange channel; 112: first edge beam structure; 113: second edge beam structure; 114: accommodating space; 12: second part; 20: battery cell;
200: controller;
300: motor.

### DETAILED DESCRIPTION

To make the objectives, technical solutions, and advantages of the present application more apparent, the present application is further described in detail below with reference to the drawings and embodiments. It should be understood that the specific embodiments described herein are merely illustrative of the present application and are not intended to limit the present application.

It should be noted that when a component is referred to as being "fixed to" or "provided on" another component, the component can be directly on the other component or be indirectly on the other component. When a component is referred to as being "connected to" another component, the component can be directly or indirectly connected to the other component. The orientations or positional relationships indicated by the terms "upper", "lower", "left", "right", and the like are those shown based on the drawings. These terms are merely intended to facilitate description rather than to indicate or imply that the device or element referred to must have a specific orientation or be constructed and operated in the specific orientation, and thus should not be construed as a limitation to the embodiments of the present application. For those of ordinary skill in the art, the specific meanings of the above terms can be understood according to specific conditions. In addition, the terms "first" and "second" are used for description only and are not to be construed as indicating or implying relative importance or to implicitly indicate the number of technical features. The term "plurality of" means two or more, unless otherwise explicitly and specifically defined.

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings are only exemplary and should not impose any limitation on the present application.

The battery mentioned in the embodiments of the present application refers to a single physical module including one or a plurality of battery cells to provide higher voltage and capacity. The battery generally includes a case configured to encapsulate one or more battery cells. The case can, to a certain extent, prevent liquid or other foreign matter from affecting the charging or discharging of the battery cells.

In the related art, the case generally includes a frame and a plate assembly, the frame defines an accommodating space of the case, the battery cells are accommodated in the accommodating space, and an opening of the frame is lidded with the plate assembly to close the opening of the frame. The plate assembly is generally made of aluminum, while the frame is generally made of steel. Due to different coefficients of thermal expansion of aluminum and steel, thermal expansion mismatch occurs during a welding process, which may easily cause cracks, deformation, or other problems. Therefore, fasteners such as a bolt, a screw, or a rivet are generally used to connect the plate assembly and the frame. To enable a stable connection between the plate assembly and the frame and achieve a good sealing effect, a plurality of fasteners are generally used to arrange around the opening of the frame and connect the plate assembly and the frame. However, this may lead to an excessive number of components in the case, which increases the assembly time of the case, thereby resulting in a decrease in the assembly efficiency of the case.

To reduce the number of components in the case and improve the assembly efficiency of the case, according to the plate assembly in the case provided in the embodiments of the present application, the first frame edge part and the second frame edge part are directly provided on the first plate member and the second plate member, respectively, and the first edge beam structure is formed by connecting the first frame edge part to the second frame edge part. In this way, the plate assembly is connected to the first edge beam structure without using fasteners, which effectively reduces the number of components in the case, thereby effectively simplifying the assembly process of the case and improving the assembly efficiency of the case.

The technical solutions described in the embodiments of the present application are suitable for batteries and electric devices using batteries. The electric device may be, but is not limited to, a vehicle, a mobile phone, a portable device, a laptop computer, a ship, a spacecraft, an electric toy, an electric tool, or the like. The vehicle may be a fuel vehicle, a gas vehicle, or a new energy vehicle. The new energy vehicle may be a pure electric vehicle, a hybrid vehicle, an extended-range vehicle, or the like. The spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway-specific electric tool, such as an electric drill, an electric grinder, an electric wrench, an electric screwdriver, an electric hammer, an impact drill, a concrete vibrator, and an electric planer.

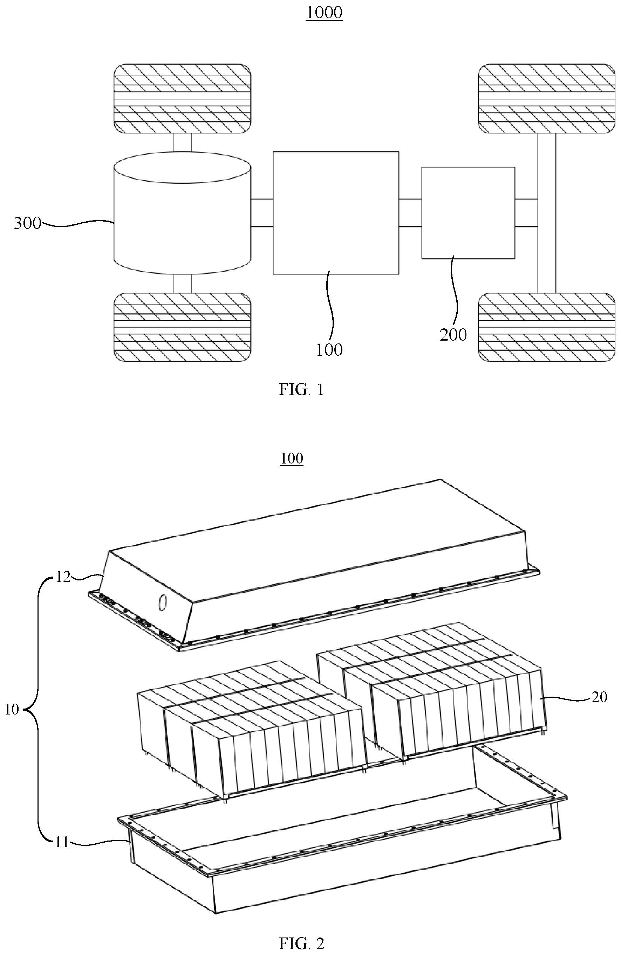

Referring to FIG. 1, FIG. 1 is a schematic structural diagram of a vehicle 1000 according to an embodiment of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded schematic view of the battery 100 according to an embodiment of the present application. The battery 100 includes a case 10 and battery cells 20. The battery cells 20 are accommodated in the case 10. The case 10 is configured to provide an accommodating space 114 for the battery cells 20, and the case 10 may be of various structures. In some embodiments, the case 10 may include a first part 11 and a second part 12. The first part 11 and the second part 12 are mutually lidded with each other, and the first part 11 and the second part 12 jointly define the accommodating space 114 for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space 114. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In some embodiments, the case 10 may be a part of the chassis structure of the vehicle 1000. For example, a part of the case 10 may be at least a part of the floor of the vehicle 1000, or a part of the case 10 may be at least a part of the crossbeam and the longitudinal beam of the vehicle 1000.

In the battery 100, when a plurality of battery cells 20 are provided, the plurality of battery cells 20 may be connected in series, in parallel, or in series-parallel. The series-parallel connection means that both series connection and parallel connection are present for the connection of the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery or a primary battery, where the secondary battery refers to a battery cell 20 that can continue to be used by reactivating the active material through charging after the battery cell 20 is discharged, and the primary battery refers to a battery cell 20 that cannot be recharged to reactivate the active material for continued use after electric energy of the battery cell 20 is exhausted. The battery cell 20 may also be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like, but is not limited thereto. The battery cell 20 may be a cylindrical battery cell, a prismatic battery cell, a pouch battery cell, or a battery cell 20 of other shapes. The prismatic battery cell includes a square-housing battery cell, a blade-shaped battery cell, and a polygonal prismatic battery cell, and the polygonal prismatic battery cell is, for example, a hexagonal prismatic battery cell. This is not particularly limited in the present application.

The battery cell 20 in the embodiments of the present application includes an electrode assembly and a housing, and the electrode assembly is mounted in the housing to protect the electrode assembly by means of the housing.

The electrode assembly is also referred to as a cell, and the electrode assembly is composed of a positive electrode plate, a negative electrode plate, and a separator. The electrode assembly primarily operates by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The portion of the positive electrode current collector that is not coated with the positive electrode active substance layer protrudes from the portion of the positive electrode current collector that is coated with the positive electrode active substance layer, and the portion that is not coated with the positive electrode active substance layer serves as a positive electrode tab, or a metal conductor is welded to the positive electrode current collector and led out to serve as the positive electrode tab. Taking lithium-ion batteries as an example, the material of the positive electrode current collector may be aluminum, and the positive electrode active substance may be, but is not limited to, lithium cobaltate, lithium iron phosphate, ternary lithium, lithium manganate, or the like.

The negative electrode plate includes a negative electrode current collector and a negative electrode active substance layer, and the negative electrode active substance layer is applied on the surface of the negative electrode current collector. The portion of the negative electrode current collector that is not coated with the negative electrode active substance layer protrudes from the portion of the negative electrode current collector that is coated with the negative electrode active substance layer, and the portion that is not coated with the negative electrode active substance layer serves as a negative electrode tab, or a metal conductor is welded to the negative electrode current collector and led out to serve as the negative electrode tab. The material of the negative electrode current collector may be copper, and the negative electrode active substance may be, but is not limited to, carbon, silicon, or the like.

To ensure, to a certain extent, the passing of a large current without fusing, a plurality of positive electrode tabs are provided and stacked together, and a plurality of negative electrode tabs are provided and stacked together.

The electrode assembly may be of a wound structure or a stacked structure. The embodiments of the present application are not limited thereto. For a wound structure, generally, tabs are welded to current collectors, and components are then arranged in the sequence of positive electrode plate-separator-negative electrode plate-separator, and then winding is performed to obtain a cylindrical or prismatic cell. For a stacked structure, generally, tabs are led out from current collectors, and the positive electrode plate, the negative electrode plate, and the separator are arranged in the sequence of positive electrode plate-separator-negative electrode plate-separator, and are stacked layer by layer to form a stacked cell, where the separator may be cut into separator pieces for direct stacking, or the separator may be folded in a Z-shape without being cut. The material of the separator may be, but is not limited to, polypropylFnF (PP), polyFthylFnF (PF), or the like. The separator is an insulating film disposed between the positive electrode plate and the negative electrode plate, and its main function is to isolate the positive electrode plate and the negative electrode plate and prevent electrons in the battery cell 20 from passing freely, so as to prevent short circuits to a certain extent, thus enabling ions in the electrolytic solution to pass freely between the positive electrode plate and the negative electrode plate to form a circuit between the positive electrode plate and the negative electrode plate. The positive electrode plate and the negative electrode plate are collectively referred to as electrode plates. The positive electrode tab and the negative electrode tab are collectively referred to as tabs.

The housing refers to a shell structure having a space therein to accommodate and protect the electrode assembly. The housing may be made of a material with a certain hardness and strength, such that the housing is not easily deformed when being pressed and collided. This enables the battery cell 20 to have higher structural strength, and the reliability can also be improved. The material of the housing may be, but is not limited to, copper, iron, aluminum, stainless steel, an aluminum alloy, plastic, or the like.

The housing of the battery cell 20 is provided with an electrode terminal. The electrode terminal refers to a conductive member disposed on the housing, and the electrode terminal is connected to the tabs of the electrode assembly to output electric energy of the battery cell 20 or charge the battery cell 20. The battery cell 20 generally has two electrode terminals, and the two electrode terminals are connected to the positive electrode tab and the negative electrode tab of the electrode assembly, respectively. The electrode terminal connected to the positive electrode tab is a positive electrode terminal, and the electrode terminal connected to the negative electrode tab is a negative electrode terminal.

In some embodiments, the battery cell 20 further includes a pressure relief mechanism. The pressure relief mechanism is disposed on the housing of the battery cell 20, such that when the temperature or pressure of the battery cell 20 exceeds the safety threshold, the gas or liquid inside the battery cell 20 can be released, so as to reduce the pressure inside the battery cell 20 and reduce the risk of explosion of the battery cell 20.

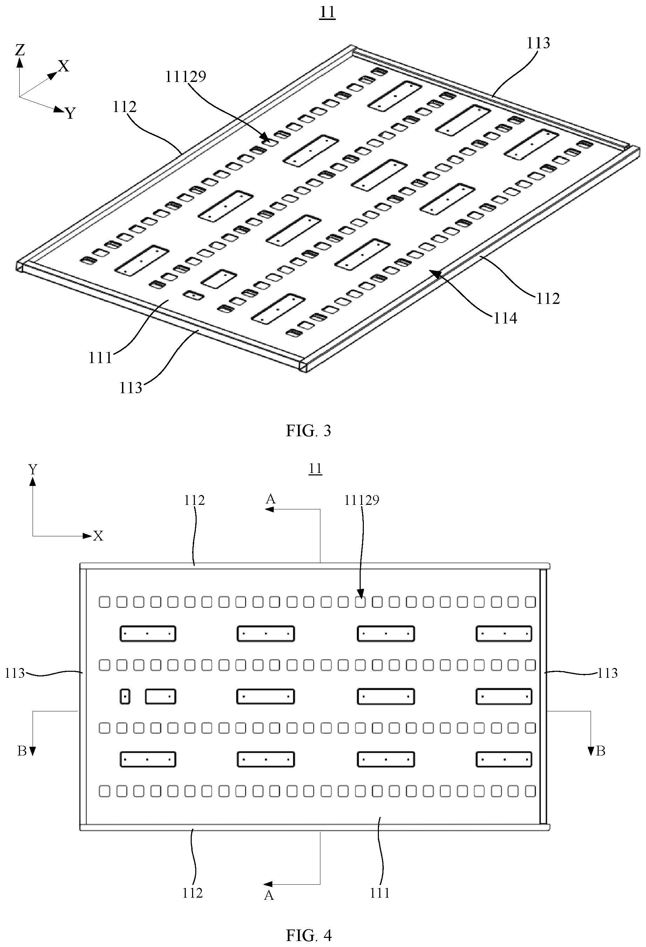

Referring to FIG. 3, the case 10 has a height direction, a length direction, and a width direction. The height direction of the case 10 may refer to a Z direction shown in FIG. 3, the width direction of the case 10 may refer to a Y direction shown in FIG. 3, and the length direction of the case 10 may refer to an X direction shown in FIG. 3. The length of the battery 100 may be greater than or less than the width. The case 10 defines an outline structure of the battery 100, such that the height direction of the case 10 is a height direction of the battery 100, the length direction of the case 10 is a length direction of the battery 100, and the width direction of the case 10 is a width direction of the battery 100.

The case 10 according to the embodiments of the present application is described below with reference to the drawings.

In a first aspect, referring to FIGs. 3 to 6 together, the embodiments of the present application provide a case 10. The case includes a plate assembly 111, and the plate assembly 111 includes a first plate member 1111 and a second plate member 1112 that are disposed in a stacked manner. The first plate member 1111 includes a first plate body 11111 and a first frame edge part 11112 connected to an edge side of the first plate body 11111, and the second plate member 1112 includes a second plate body 11121 and a second frame edge part 11122 connected to an edge side of the second plate body 11121. The first frame edge part 11112 is connected to the second frame edge part 11122 to form a first edge beam structure 112, and the first edge beam structure 112 defines an accommodating space 114 for accommodating the battery cells 20.

The plate assembly 111 is a component configured to close the accommodating space 114 of the case 10. The plate assembly 111 may constitute the above first part 11, or may constitute the above second part 12. The following description is provided by taking an example where the plate assembly 111 constitutes the above first part 11.

The first plate member 1111 and the second plate member 1112 are two parts of the plate assembly 111. The first plate member 1111 and the second plate member 1112 may be made of one or more metal materials, and the metal material may be, but is not limited to, aluminum, an aluminum alloy, iron, stainless steel, copper, or the like. The first plate member 1111 and the second plate member 1112 may be made of the same material or different materials.

The first plate member 1111 and the second plate member 1112 being disposed in a stacked manner means that in the thickness direction of the plate assembly 111, the first plate member 1111 and the second plate member 1112 are stacked together, and the thickness direction of the plate assembly 111 may be the height direction of the battery 100; that is, the stacking direction of the first plate member 1111 and the second plate member 1112 is the height direction of the battery 100.

In some embodiments, in the height direction of the battery 100, the plate assembly 111 is disposed below the battery cells 20, the second plate member 1112 is disposed in a stacked manner on one side, facing the above accommodating space 114, of the first plate member 1111, and the battery cells 20 are placed on the second plate member 1112, so that the battery cells 20 are supported.

In some other embodiments, in the height direction of the battery 100, the plate assembly 111 is disposed above the battery cells 20, the second plate member 1112 is disposed in a stacked manner on one side, facing the above accommodating space 114, of the first plate member 1111, and the battery cells 20 are connected to the second plate member 1112, so that the battery cells 20 are supported.

The first plate body 11111 is a main body part of the first plate member 1111, and the first plate body 11111 may be a flat plate, or may be a plate body with a concave-convex structure. For example, a plate surface of the first plate body 11111 is provided with a recessed structure and/or a protruding structure. The second plate body 11121 is a main body part of the second plate member 1112, and the second plate body 11121 may be a flat plate, or may be a plate body with a concave-convex structure. For example, a plate surface of the second plate body 11121 is provided with a recessed structure and/or a protruding structure. In the thickness direction of the plate assembly 111, the first plate body 11111 and the second plate body 11121 are stacked together. The first plate body 11111 and the second plate body 11121 may be attached to each other, or may be spaced apart from each other.

The first frame edge part 11112 is an edge part of the first plate member 1111, and the second frame edge part 11122 is an edge part of the second plate member 1112. The first frame edge part 11112 is connected to the second frame edge part 11122 to form the first edge beam structure 112, and the first edge beam structure 112 is a part of an outer frame structure of the case 10 for defining the above accommodating space 114. At least a part of at least one of the first frame edge part 11112 and the second frame edge part 11122 is of a profile structure, and the first frame edge part 11112 and the second frame edge part 11122 jointly define, in an enclosing manner, an inner cavity of the first edge beam structure 112.

In some embodiments, the first frame edge part 11112 includes a first main body and two first connecting bodies, one first connecting body is connected between the first plate body 11111 and the first main body, the other first connecting body is connected to one side, facing away from the first plate body 11111, of the first main body, and the first main body is of a profile structure. The second frame edge part 11122 includes a second main body and two second connecting bodies, one second connecting body is connected between the second plate body 11121 and the second main body, the other second connecting body is connected to one side, facing away from the second plate body 11121, of the second main body, and the second main body is of a profile structure. The two first connecting bodies are connected to the two second connecting bodies in a one-to-one correspondence manner, and the first main body and the second main body jointly define, in an enclosing manner, the inner cavity of the first edge beam structure 112. It should be noted that the first connecting body may be directly or indirectly connected to the second connecting body, and the connection manner between the first connecting body and the second connecting body may be, but is not limited to, welding, bonding, or the like.

Certainly, in other embodiments, the situation may also be that the first main body is of a flat plate structure, and the second main body is of a profile structure; alternatively, the first main body is of a profile structure, and the second main body is of a flat plate structure.

According to the plate assembly 111 in the case 10 provided in the embodiments of the present application, the first frame edge part 11112 and the second frame edge part 11122 are directly provided on the first plate member 1111 and the second plate member 1112, respectively, and the first edge beam structure 112 is formed by connecting the first frame edge part 11112 to the second frame edge part 11122. In this way, the edge beam structure is directly formed on the plate assembly 111, such that the plate assembly 111 is connected to the edge beam structure without using additional fasteners, which effectively reduces the number of components in the case 10, thereby effectively simplifying the assembly process of the case 10 and improving the assembly efficiency of the case 10.

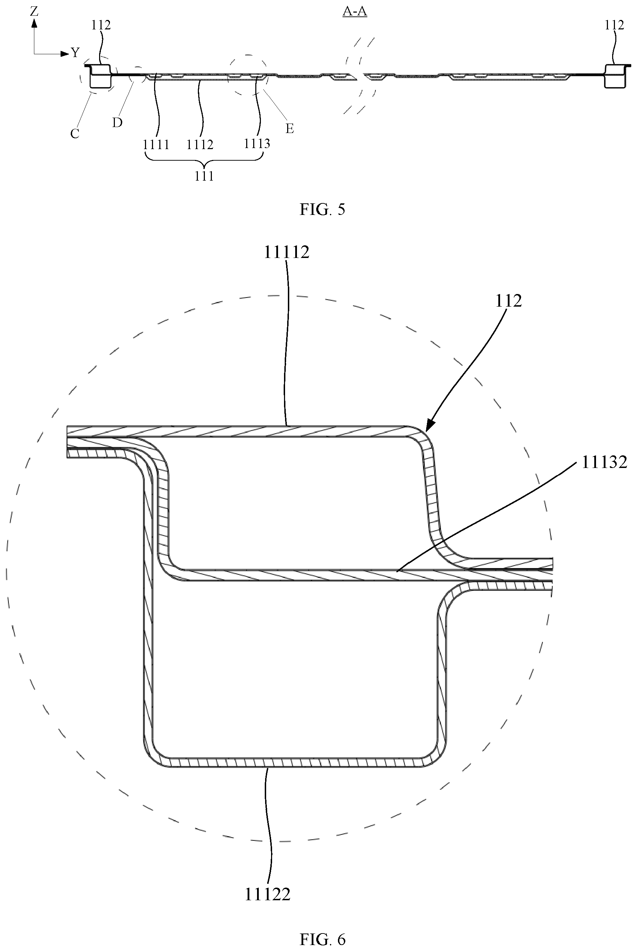

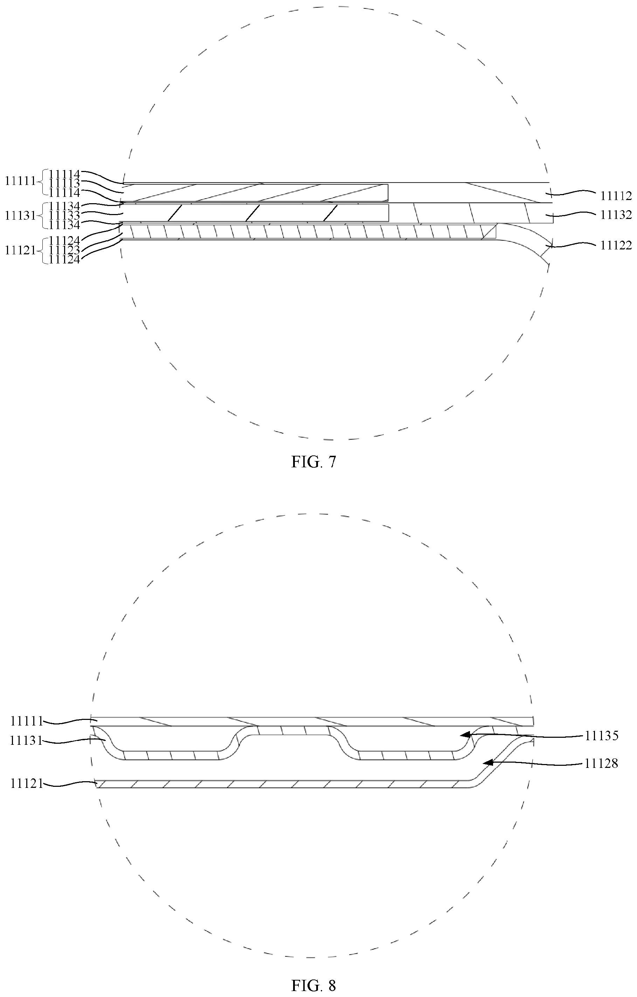

In some embodiments of the present application, referring to FIGs. 5 and 7 together, the first frame edge part 11112 includes a first steel layer body 11113, and the first steel layer body 11113 constitutes at least a part of the first edge beam structure 112.

The first steel layer body 11113 is a layer member made of steel. The first steel layer body 11113 may constitute only a part or the entirety of the above first main body, may constitute only a part or the entirety of the above first connecting body, or may constitute a part or the entirety of the above first main body and a part or the entirety of the above first connecting body.

By adopting the above technical solution, the structural strength of the first edge beam structure 112 is effectively improved.

In some embodiments of the present application, referring to FIGs. 5 and 7 together, the first frame edge part 11112 further includes two first aluminum layer bodies 11114 connected to the first plate body 11111, and the two first aluminum layer bodies 11114 cooperatively clamp the first steel layer body 11113 in the stacking direction of the first plate member 1111 and the second plate member 1112.

The first aluminum layer body 11114 is a layer member made of aluminum. The two first aluminum layer bodies 11114 cooperatively clamp the first steel layer body 11113 in the stacking direction of the first plate member 1111 and the second plate member 1112; that is, the two first aluminum layer bodies 11114 cooperatively clamp the first steel layer body 11113 in the thickness direction of the plate assembly 111. The first aluminum layer body 11114 and the first plate body 11111 may be an integral connecting member or a separate connecting member.

Compared with steel, for the same volume, aluminum has a lower mass. By adopting the above technical solution, the weight of the first plate member 1111 is effectively reduced, thereby effectively improving the mass energy density of the battery 100.

In some embodiments of the present application, the first plate body 11111 is an aluminum plate.

In other words, the first plate body 11111 is made of aluminum.

In some embodiments, the first plate member 1111 may be formed by rolling a steel plate and two aluminum plates. Specifically, the steel plate is placed between the two aluminum plates, such that the two aluminum plates clamp the steel plate, with the steel plate located at edge parts of the aluminum plates. The steel plate and the two aluminum plates are then rolled, middle parts of the two aluminum plates are pressed and bonded to form the first plate body 11111, and the edge parts of the two aluminum plates clamp the steel plate and are pressed and bonded together with the steel plate to form the first frame edge part 11112.

Certainly, in other embodiments, the first plate member 1111 may also be formed by first rolling the steel plate and the two aluminum plates to form the first frame edge part 11112, and then connecting the two first aluminum layer bodies 11114 to the first plate body 11111.

By adopting the above technical solution, not only is the connection between the first frame edge part 11112 and the first plate body 11111 facilitated, which effectively improves the connection strength between the first frame edge part 11112 and the first plate body 11111, but also the weight of the first plate member 1111 is further reduced, thereby further improving the mass energy density of the battery 100.

In some embodiments of the present application, referring to FIGs. 5 and 7 together, the second frame edge part 11122 includes a second steel layer body 11123, and the second steel layer body 11123 constitutes at least a part of the first edge beam structure 112.

The second steel layer body 11123 is a layer member made of steel. The second steel layer body 11123 may constitute only a part or the entirety of the above second main body, may constitute only a part or the entirety of the above second connecting body, or may constitute a part or the entirety of the above second main body and a part or the entirety of the above second connecting body.

By adopting the above technical solution, the structural strength of the first edge beam structure 112 is effectively improved.

In some embodiments of the present application, referring to FIGs. 5 and 7 together, the second frame edge part 11122 further includes two second aluminum layer bodies 11124 connected to the second plate body 11121, and the two second aluminum layer bodies 11124 cooperatively clamp the second steel layer body 11123 in the stacking direction of the first plate member 1111 and the second plate member 1112.

The second aluminum layer body 11124 is a layer member made of aluminum. The two second aluminum layer bodies 11124 cooperatively clamp the second steel layer body 11123 in the stacking direction of the first plate member 1111 and the second plate member 1112; that is, the two second aluminum layer bodies 11124 cooperatively clamp the second steel layer body 11123 in the thickness direction of the plate assembly 111. The second aluminum layer body 11124 and the second plate body 11121 may be an integral connecting member or a separate connecting member.

Compared with steel, for the same volume, aluminum has a lower mass. By adopting the above technical solution, the weight of the second plate member 1112 is effectively reduced, thereby effectively improving the mass energy density of the battery 100.

In some embodiments of the present application, the second plate body 11121 is an aluminum plate.

In other words, the second plate body 11121 is made of aluminum.

In some embodiments, the second plate member 1112 may be formed by rolling a steel plate and two aluminum plates. Specifically, the steel plate is placed between the two aluminum plates, such that the two aluminum plates clamp the steel plate, with the steel plate located at edge parts of the aluminum plates. The steel plate and the two aluminum plates are then rolled, middle parts of the two aluminum plates are pressed and bonded to form the second plate body 11121, and the edge parts of the two aluminum plates clamp the steel plate and are pressed and bonded together with the steel plate to form the second frame edge part 11122.

Certainly, in other embodiments, the second plate member 1112 may also be formed by first rolling the steel plate and the two aluminum plates to form the second frame edge part 11122, and then connecting the two second aluminum layer bodies 11124 to the second plate body 11121.

By adopting the above technical solution, not only is the connection between the second frame edge part 11122 and the second plate body 11121 facilitated, which effectively improves the connection strength between the second frame edge part 11122 and the second plate body 11121, but also the weight of the second plate member 1112 is further reduced, thereby further improving the mass energy density of the battery 100.

In some embodiments of the present application, referring to FIGs. 3, 4, 9, and 10 together, the first plate member 1111 further includes a third frame edge part 11115, the first frame edge part 11112 is connected to one side of the first plate body 11111 in a first direction, and the third frame edge part 11115 is connected to one side of the first plate body 11111 in a second direction. The second plate member 1112 further includes a fourth frame edge part 11125, the second frame edge part 11122 is connected to one side of the second plate body 11121 in the first direction, and the fourth frame edge part 11125 is connected to one side of the second plate body 11121 in the second direction. The third frame edge part 11115 is connected to the fourth frame edge part 11125 to form a second edge beam structure 113, and the second edge beam structure 113 and the first edge beam structure 112 jointly define the accommodating space 114, where the first direction and the second direction intersect with each other and are perpendicular to the stacking direction of the first plate member 1111 and the second plate member 1112.

The first frame edge part 11112 is an edge part of the first plate member 1111 in the first direction, the third frame edge part 11115 is an edge part of the first plate member 1111 in the second direction, the second frame edge part 11122 is an edge part of the second plate member 1112 in the first direction, and the fourth frame edge part 11125 is an edge part of the second plate member 1112 in the second direction. The third frame edge part 11115 is connected to the fourth frame edge part 11125 to form the second edge beam structure 113, the second edge beam structure 113 is the other part of the outer frame structure of the case 10, and the second edge beam structure 113 and the first edge beam structure 112 jointly define the above accommodating space 114. At least a part of at least one of the third frame edge part 11115 and the fourth frame edge part 11125 is of a profile structure, and the third frame edge part 11115 and the fourth frame edge part 11125 jointly define, in an enclosing manner, an inner cavity of the second edge beam structure 113.

In some embodiments, the third frame edge part 11115 includes a third main body and two third connecting bodies, one third connecting body is connected between the first plate body 11111 and the third main body, the other third connecting body is connected to one side, facing away from the first plate body 11111, of the third main body, and the third main body is of a profile structure. The fourth frame edge part 11125 includes a fourth main body and two fourth connecting bodies, one fourth connecting body is connected between the second plate body 11121 and the fourth main body, the other fourth connecting body is connected to one side, facing away from the second plate body 11121, of the fourth main body, and the fourth main body is of a profile structure. The two third connecting bodies are connected to the two fourth connecting bodies in a one-to-one correspondence manner, and the third main body and the fourth main body jointly define, in an enclosing manner, the inner cavity of the second edge beam structure 113. It should be noted that the third connecting body may be directly or indirectly connected to the fourth connecting body, and the connection manner between the third connecting body and the fourth connecting body may be, but is not limited to, welding, bonding, or the like.

Certainly, in other embodiments, the situation may also be that the third main body is of a flat plate structure, and the fourth main body is of a profile structure; alternatively, the third main body is of a profile structure, and the fourth main body is of a flat plate structure.

The first direction and the second direction intersecting with each other and being perpendicular to the stacking direction of the first plate member 1111 and the second plate member 1112 means that the first direction and the second direction are perpendicular to the stacking direction of the first plate member 1111 and the second plate member 1112; that is, the first direction and the second direction are perpendicular to the height direction of the case 10. In some embodiments, the first direction may be the width direction of the case 10, and the second direction may be the length direction of the case 10. In some other embodiments, the first direction may be the length direction of the case 10, and the second direction may be the width direction of the case 10.

By adopting the above technical solution, the plate assembly 111 can be connected to the second edge beam structure 113 without using fasteners, which effectively reduces the number of components in the case 10, thereby effectively simplifying the assembly process of the case 10 and improving the assembly efficiency of the case 10.

In some embodiments of the present application, referring to FIGs. 3 and 4 together, two first frame edge parts 11112, two second frame edge parts 11122, two third frame edge parts 11115, and two fourth frame edge parts 11125 are provided. The two first frame edge parts 11112 are respectively disposed on two opposite sides of the first plate body 11111 in the first direction, the two second frame edge parts 11122 are respectively disposed on two opposite sides of the second plate body 11121 in the first direction, and the two first frame edge parts 11112 are disposed in one-to-one correspondence with the two second frame edge parts 11122 to form two first edge beam structures 112. The two third frame edge parts 11115 are respectively disposed on two opposite sides of the first plate body 11111 in the second direction, the two fourth frame edge parts 11125 are respectively disposed on two opposite sides of the second plate body 11121 in the second direction, and the two third frame edge parts 11115 are disposed in one-to-one correspondence with the two fourth frame edge parts 11125 to form two second edge beam structures 113. The two first edge beam structures 112 and the two second edge beam structures 113 define, in an enclosing manner, the accommodating space 114.

In other words, one first edge beam structure 112, one second edge beam structure 113, the other first edge beam structure 112, and the other second edge beam structure 113 jointly define, in an enclosing manner, the outer frame structure of the case 10, and the outer frame structure defines the above accommodating space 114.

By adopting the above technical solution, the formation of the outer frame of the case 10 is facilitated, such that the plate assembly 111 is connected to the outer frame without using fasteners, which effectively reduces the number of components in the case 10, thereby effectively simplifying the assembly process of the case 10 and improving the assembly efficiency of the case 10.

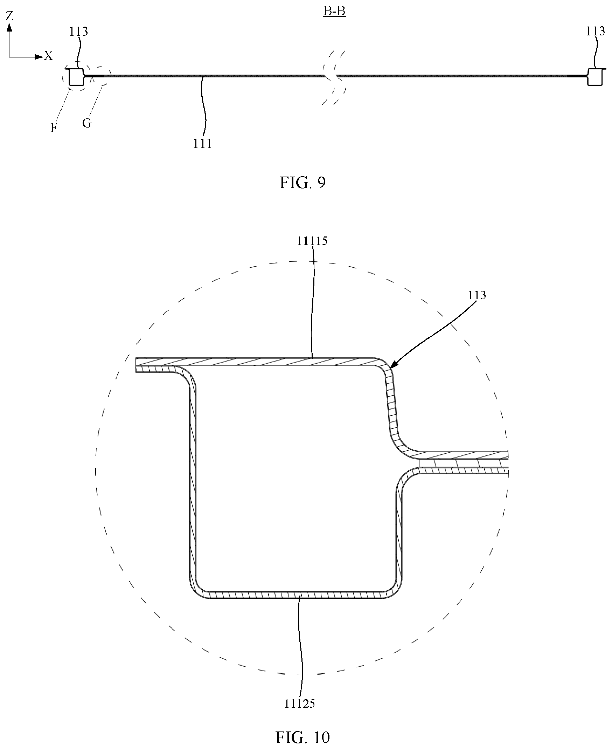

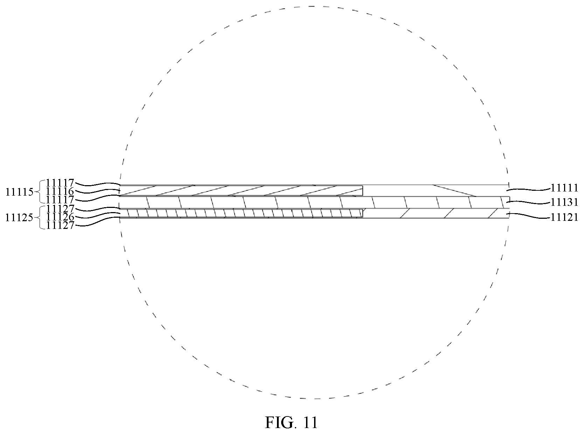

In some embodiments of the present application, referring to FIGs. 9 and 11 together, the third frame edge part 11115 includes a third steel layer body 11116, and the third steel layer body 11116 constitutes at least a part of the second edge beam structure 113.

The third steel layer body 11116 is a layer member made of steel. The third steel layer body 11116 may constitute only a part or the entirety of the above third main body, may constitute only a part or the entirety of the above third connecting body, or may constitute a part or the entirety of the above third main body and a part or the entirety of the above third connecting body.

By adopting the above technical solution, the structural strength of the second edge beam structure 113 is effectively improved.

In some embodiments of the present application, referring to FIGs. 9 and 11 together, the third frame edge part 11115 further includes two third aluminum layer bodies 11117 connected to the first plate body 11111, and the two third aluminum layer bodies 11117 cooperatively clamp the third steel layer body 11116 in the stacking direction of the first plate member 1111 and the second plate member 1112.

The third aluminum layer body 11117 is a layer member made of aluminum. The two third aluminum layer bodies 11117 cooperatively clamp the third steel layer body 11116 in the stacking direction of the first plate member 1111 and the second plate member 1112; that is, the two third aluminum layer bodies 11117 cooperatively clamp the third steel layer body 11116 in the thickness direction of the plate assembly 111. The third aluminum layer body 11117 and the first plate body 11111 may be an integral connecting member or a separate connecting member.

In some embodiments, to facilitate the connection between the third frame edge part 11115 and the first plate body 11111 and improve the connection strength between the third frame edge part 11115 and the first plate body 11111, the first plate body 11111 is an aluminum plate. As an example, two first frame edge parts 11112 and two third frame edge parts 11115 are provided, the two first frame edge parts 11112 are respectively disposed on two opposite sides of the first plate body 11111 in the first direction, and the two third frame edge parts 11115 are respectively disposed on two opposite sides of the first plate body 11111 in the second direction. The first plate member 1111 may be formed by rolling four steel plates and two aluminum plates. Specifically, the four steel plates are placed between the two aluminum plates, such that the two aluminum plates clamp the four steel plates. Two of the steel plates are respectively disposed on two opposite edge parts of the aluminum plate in the first direction, and the other two steel plates are respectively disposed on two opposite edge parts of the aluminum plate in the second direction. The four steel plates and the two aluminum plates are then rolled, middle parts of the two aluminum plates are pressed and bonded to form the first plate body 11111, the edge parts of the two aluminum plates in the first direction clamp the corresponding steel plates and are pressed and bonded together with the steel plates to form the first frame edge parts 11112, and the edge parts of the two aluminum plates in the second direction clamp the corresponding steel plates and are pressed and bonded together with the steel plates to form the third frame edge parts 11115.

Certainly, in other embodiments, the first plate member 1111 may also be formed by first rolling one steel plate and two aluminum plates to form the first frame edge parts 11112 and rolling the other steel plate and the other two aluminum plates to form the third frame edge parts 11115, and then connecting the two first aluminum layer bodies 11114 to two opposite edge parts of the first plate body 11111 in the first direction and connecting the two third aluminum layer bodies 11117 to two opposite edge parts of the first plate body 11111 in the second direction.

By adopting the above technical solution, the weight of the first plate member 1111 is effectively reduced, thereby effectively improving the mass energy density of the battery 100.

In some embodiments of the present application, referring to FIGs. 9 and 11 together, the fourth frame edge part 11125 includes a fourth steel layer body 11126, and the fourth steel layer body 11126 constitutes at least a part of the second edge beam structure 113.

The fourth steel layer body 11126 is a layer member made of steel. The fourth steel layer body 11126 may constitute only a part or the entirety of the above fourth main body, may constitute only a part or the entirety of the above fourth connecting body, or may constitute a part or the entirety of the above fourth main body and a part or the entirety of the above fourth connecting body.

By adopting the above technical solution, the structural strength of the second edge beam structure 113 is effectively improved.

In some embodiments of the present application, referring to FIGs. 9 and 11 together, the fourth frame edge part 11125 further includes two fourth aluminum layer bodies 11127 connected to the second plate body 11121, and the two fourth aluminum layer bodies 11127 cooperatively clamp the fourth steel layer body 11126 in the stacking direction of the first plate member 1111 and the second plate member 1112.

The fourth aluminum layer body 11127 is a layer member made of aluminum. The two fourth aluminum layer bodies 11127 cooperatively clamp the fourth steel layer body 11126 in the stacking direction of the first plate member 1111 and the second plate member 1112; that is, the two fourth aluminum layer bodies 11127 cooperatively clamp the fourth steel layer body 11126 in the thickness direction of the plate assembly 111. The fourth aluminum layer body 11127 and the second plate body 11121 may be an integral connecting member or a separate connecting member.

In some embodiments, to facilitate the connection between the fourth frame edge part 11125 and the second plate body 11121 and improve the connection strength between the fourth frame edge part 11125 and the second plate body 11121, the second plate body 11121 is an aluminum plate. As an example, two second frame edge parts 11122 and two fourth frame edge parts 11125 are provided, the two second frame edge parts 11122 are respectively disposed on two opposite sides of the second plate body 11121 in the first direction, and the two fourth frame edge parts 11125 are respectively disposed on two opposite sides of the second plate body 11121 in the second direction. The second plate member 1112 may be formed by rolling four steel plates and two aluminum plates. Specifically, the four steel plates are placed between the two aluminum plates, such that the two aluminum plates clamp the four steel plates. Two of the steel plates are respectively disposed on two opposite edge parts of the aluminum plate in the first direction, and the other two steel plates are respectively disposed on two opposite edge parts of the aluminum plate in the second direction. The four steel plates and the two aluminum plates are then rolled, middle parts of the two aluminum plates are pressed and bonded to form the second plate body 11121, the edge parts of the two aluminum plates in the first direction clamp the corresponding steel plates and are pressed and bonded together with the steel plates to form the second frame edge parts 11122, and the edge parts of the two aluminum plates in the second direction clamp the corresponding steel plates and are pressed and bonded together with the steel plates to form the fourth frame edge parts 11125.

Certainly, in other embodiments, the second plate member 1112 may also be formed by first rolling one steel plate and two aluminum plates to form the second frame edge parts 11122 and rolling the other steel plate and the other two aluminum plates to form the fourth frame edge parts 11125, and then connecting the two second aluminum layer bodies 11124 to two opposite edge parts of the second plate body 11121 in the first direction and connecting the two fourth aluminum layer bodies 11127 to two opposite edge parts of the second plate body 11121 in the second direction.

By adopting the above technical solution, the weight of the second plate member 1112 is effectively reduced, thereby effectively improving the mass energy density of the battery 100.

In some embodiments of the present application, referring to FIGs. 5 and 6 together, the case 10 further includes a third plate member 1113 disposed in a stacked manner between the first plate member 1111 and the second plate member 1112, the third plate member 1113 includes a third plate body 11131 and a fifth frame edge part 11132 connected to an edge side of the third plate body 11131, and the fifth frame edge part 11132 extends to the inner cavity of the first edge beam structure 112 and is connected between the first frame edge part 11112 and the second frame edge part 11122.

The third plate member 1113 is a middle part of the plate assembly 111. The third plate member 1113 may be made of one or more metal materials, and the metal material may be, but is not limited to, aluminum, an aluminum alloy, iron, stainless steel, copper, or the like. The third plate member 1113 and the first plate member 1111 may be made of the same material or different materials. Similarly, the third plate member 1113 and the second plate member 1112 may be made of the same material or different materials.

The third plate member 1113 being disposed in a stacked manner between the first plate member 1111 and the second plate member 1112 means that in the thickness direction of the plate assembly 111, the first plate member 1111, the third plate member 1113, and the second plate member 1112 are sequentially stacked together.

The third plate body 11131 is a main body part of the third plate member 1113, and the third plate body 11131 may be a flat plate, or may be a plate body with a concave-convex structure. For example, a plate surface of the third plate body 11131 is provided with a recessed structure and/or a protruding structure. In the thickness direction of the plate assembly 111, the first plate body 11111, the third plate body 11131, and the second plate body 11121 are sequentially stacked together.

The fifth frame edge part 11132 is an edge part of the third plate member 1113. The fifth frame edge part 11132 extends to the inner cavity of the first edge beam structure 112 and is connected between the first frame edge part 11112 and the second frame edge part 11122, such that the fifth frame edge part 11132 may serve as a reinforcing rib of the first edge beam structure 112, thereby further improving the strength of the first edge beam structure 112.

In some embodiments, the fifth frame edge part 11132 includes a fifth main body and two fifth connecting bodies, one fifth connecting body is connected between the third plate body 11131 and the fifth main body, and the other fifth connecting body is connected to one side, facing away from the third plate body 11131, of the fifth main body. The one first connecting body described above is connected to one second connecting body by means of one fifth connecting body, and the other first connecting body described above is connected to the other second connecting body by means of the other fifth connecting body. The fifth main body is disposed in the inner cavity of the first edge beam structure 112, and the fifth body may be of a profile structure or a flat plate structure. The connection manner between the first connecting body and the fifth connecting body may be, but is not limited to, welding, bonding, or the like. Similarly, the connection manner between the second connecting body and the fifth connecting body may be, but is not limited to, welding, bonding, or the like.

By adopting the above technical solution, the structural strength of the first edge beam structure 112 is further improved.

In some embodiments of the present application, referring to FIGs. 5 and 7 together, the fifth frame edge part 11132 includes a fifth steel layer body 11133, and the fifth steel layer body 11133 extends to the inner cavity of the first edge beam structure 112.

The fifth steel layer body 11133 is a layer member made of steel. The fifth steel layer body 11133 may constitute only a part or the entirety of the above fifth main body, may constitute only a part or the entirety of the above fifth connecting body, or may constitute a part or the entirety of the above fifth main body and a part or the entirety of the above fifth connecting body.

By adopting the above technical solution, the structural strength of the first edge beam structure 112 is further improved.

In some embodiments of the present application, referring to FIGs. 5 and 7 together, the fifth frame edge part 11132 further includes two fifth aluminum layer bodies 11134 connected to the third plate body 11131, and the two fifth aluminum layer bodies 11134 cooperatively clamp the fifth steel layer body 11133 in the stacking direction of the first plate member 1111 and the second plate member 1112.

The fifth aluminum layer body 11134 is a layer member made of aluminum. The two fifth aluminum layer bodies 11134 cooperatively clamp the fifth steel layer body 11133 in the stacking direction of the first plate member 1111 and the second plate member 1112; that is, the two fifth aluminum layer bodies 11134 cooperatively clamp the fifth steel layer body 11133 in the thickness direction of the plate assembly 111. The fifth aluminum layer body 11134 and the third plate body 11131 may be an integral connecting member or a separate connecting member.

Compared with steel, for the same volume, aluminum has a lower mass. By adopting the above technical solution, the weight of the third plate member 1113 is effectively reduced, thereby effectively improving the mass energy density of the battery 100.

In some embodiments of the present application, the third plate body 11131 is an aluminum plate.

In other words, the third plate body 11131 is made of aluminum.

In some embodiments, the third plate member 1113 may be formed by rolling a steel plate and two aluminum plates. Specifically, the steel plate is placed between the two aluminum plates, such that the two aluminum plates clamp the steel plate, with the steel plate located at edge parts of the aluminum plates. The steel plate and the two aluminum plates are then rolled, middle parts of the two aluminum plates are pressed and bonded to form the third plate body 11131, and the edge parts of the two aluminum plates clamp the steel plate and are pressed and bonded together with the steel plate to form the fifth frame edge part 11132.

Certainly, in other embodiments, the third plate member 1113 may also be formed by first rolling the steel plate and the two aluminum plates to form the fifth frame edge part 11132, and then connecting the two fifth aluminum layer bodies 11134 to the third plate body 11131.

By adopting the above technical solution, not only is the connection between the fifth frame edge part 11132 and the third plate body 11131 facilitated, which effectively improves the connection strength between the fifth frame edge part 11132 and the third plate body 11131, but also the weight of the third plate member 1113 is further reduced, thereby further improving the mass energy density of the battery 100.

In some embodiments of the present application, referring to FIGs. 3 to 5 and 8 together, the second plate body 11121 is disposed on one side, facing away from the accommodating space 114, of the third plate member 1113. One side, facing the third plate member 1113, of the second plate body 11121 is provided with a gas guiding channel 11128, and the gas guiding channel 11128 is in communication with the external environment of the case 10. A through hole 11129 is formed at a junction between the first plate body 11111 and the third plate body 11131, and the gas guiding channel 11128 is in communication with the accommodating space 114 via the through hole 11129.

The gas guiding channel 11128 is configured to communicate the accommodating space 114 of the case 10 with the external environment of the case 10. A plurality of gas guiding channels 11128 may be provided, the plurality of gas guiding channels 11128 are arranged side by side, and the plurality of gas guiding channels 11128 may be in communication with each other or may not be in communication with each other. The gas guiding channel 11128 may extend in any direction. In some embodiments, the gas guiding channel 11128 extends in the length direction of the case 10. In some other embodiments, the gas guiding channel 11128 extends in the width direction of the case 10.

The through hole 11129 is configured to communicate the gas guiding channel 11128 with the accommodating space 114 of the case 10. It can be understood that the through hole 11129 is disposed opposite to the gas guiding channel 11128, and the through hole 11129 extends through the junction between the first plate body 11111 and the third plate body 11131 in the thickness direction of the first plate member 1111, so as to communicate the gas guiding channel 11128 with the accommodating space 114 of the case 10. A plurality of through holes 11129 may be provided. The shape of the through hole 11129 may be, but is not limited to, circular, square, or the like.

In some embodiments, the pressure relief mechanism of the battery cell 20 is disposed opposite to the through hole 11129. In the case that the battery cell 20 undergoes thermal runaway, a large amount of high-temperature gas may be generated inside the battery cell 20. When the pressure of the battery cell 20 exceeds the safety threshold, the pressure relief mechanism is opened, and the high-temperature gas is discharged to the external environment of the case 10 via the pressure relief mechanism, the through hole 11129, and the gas guiding channel 11128 in sequence, so as to reduce the risk of explosion and combustion of the battery 100.

By adopting the above technical solution, the second plate member 1112 can be used as a gas guiding plate, which facilitates discharge of gas from the accommodating space 114 of the case 10 to the outside in the case that the battery 100 undergoes thermal runaway.

In some embodiments of the present application, referring to FIGs. 5 and 8 together, the first plate body 11111 is connected to the third plate body 11131 to form a heat exchange channel 11135, and the heat exchange channel 11135 is configured to accommodate a heat exchange medium to adjust the temperature of the battery cell 20.

The heat exchange channel 11135 is configured to provide a flow space for the heat exchange medium. A plurality of heat exchange channels 11135 may be provided, the plurality of heat exchange channels 11135 are arranged side by side, and the plurality of heat exchange channels 11135 may be in communication with each other. For example, the plurality of heat exchange channels 11135 are in communication end-to-end in sequence. The heat exchange channel 11135 may extend in any direction. In some embodiments, the heat exchange channel 11135 extends in the length direction of the case 10. In some other embodiments, the heat exchange channel 11135 extends in the width direction of the case 10.

By adopting the above technical solution, the first plate body 11111 can be connected to the third plate body 11131 to form a heat exchange plate, which facilitates heat exchange of the battery cell 20 accommodated in the accommodating space 114, so as to regulate the temperature of the battery cell 20.

In some embodiments of the present application, referring to FIGs. 3 to 5 and 8 together, the first plate body 11111 is disposed on one side, facing the accommodating space 114, of the third plate member 1113, and the second plate body 11121 is disposed on one side, facing away from the accommodating space 114, of the third plate member 1113. One side, facing the third plate member 1113, of the second plate body 11121 is provided with the gas guiding channel 11128, and the gas guiding channel 11128 is in communication with the external environment of the case 10. The through hole 11129 is formed at the junction between the first plate body 11111 and the third plate body 11131, the gas guiding channel 11128 is in communication with the accommodating space 114 via the through hole 11129, and one side, facing the first plate member 1111, of the third plate body 11131 is provided with the heat exchange channel 11135.

By adopting the above technical solution, not only can the second plate member 1112 be used as the gas guiding plate, which facilitates discharge of gas from the accommodating space 114 of the case 10 to the outside in the case that the battery 100 undergoes thermal runaway, but also the first plate body 11111 can be connected to the third plate body 11131 to form the heat exchange plate, which facilitates heat exchange of the battery cell 20 accommodated in the accommodating space 114, so as to regulate the temperature of the battery cell 20.

In some embodiments of the present application, the first frame edge part 11112 is welded to the fifth frame edge part 11132.

In some other embodiments of the present application, the second frame edge part 11122 is welded to the fifth frame edge part 11132.

In yet other embodiments of the present application, the first frame edge part 11112 is welded to the fifth frame edge part 11132, and the second frame edge part 11122 is welded to the fifth frame edge part 11132.

The welding manner between the first frame edge part 11112 and the fifth frame edge part 11132 and the welding manner between the second frame edge part 11122 and the fifth frame edge part 11132 may be, but are not limited to, brazing, laser welding, or the like.

By adopting the above technical solution, the connection between the first frame edge part 11112 and/or the second frame edge part 11122 and the fifth frame edge part 11132 is facilitated.

In a second aspect, referring to FIG. 2, the embodiments of the present application provide a battery 100. The battery includes the case 10 according to any one of the above embodiments.

The battery 100 according to the embodiments of the present application uses the battery cell 20 according to any one of the above embodiments, such that the number of components in the battery 100 is effectively reduced, thereby effectively simplifying the assembly process of the battery 100 and improving the assembly efficiency of the battery 100.

In a third aspect, referring to FIG. 1, the embodiments of the present application provide an electric device. The electric device includes the above battery 100.

The electric device according to the embodiments of the present application uses the above battery 100, such that the number of components in the electric device is effectively reduced, thereby effectively simplifying the assembly process of the electric device and improving the assembly efficiency of the electric device.
The above descriptions are merely preferred embodiments of the present application, and are not intended to limit the present application. Any modification, equivalent substitution, improvement, and the like made within the spirit and principle of the present application shall all fall within the protection scope of the present application.

## Claims

1. A case, wherein the case comprises a plate assembly, the plate assembly comprises a first plate member and a second plate member that are disposed in a stacked manner, the first plate member comprises a first plate body and a first frame edge part connected to an edge side of the first plate body, the second plate member comprises a second plate body and a second frame edge part connected to an edge side of the second plate body, the first frame edge part is connected to the second frame edge part to form a first edge beam structure, and the first edge beam structure defines an accommodating space for accommodating a battery cell.

2. The case according to claim 1, wherein the first frame edge part comprises a first steel layer body, and the first steel layer body constitutes at least a part of the first edge beam structure.

3. The caseaccording to claim 2, wherein the first frame edge part further comprises two first aluminum layer bodies connected to the first plate body, and the two first aluminum layer bodies cooperatively clamp the first steel layer body in a stacking direction of the first plate member and the second plate member.

4. The case according to any one of claims 1 to 3, wherein the first plate body is an aluminum plate.

5. The case according to any one of claims 1 to 4, wherein the second frame edge part comprises a second steel layer body, and the second steel layer body constitutes at least a part of the first edge beam structure.

6. The case according to claim 5, wherein the second frame edge part further comprises two second aluminum layer bodies connected to the second plate body, and the two second aluminum layer bodies cooperatively clamp the second steel layer body in the stacking direction of the first plate member and the second plate member.

7. The case according to any one of claims 1 to 6, wherein the second plate body is an aluminum plate.

8. The case according to any one of claims 1 to 7, wherein the first plate member further comprises a third frame edge part, the first frame edge part is connected to one side of the first plate body in a first direction, and the third frame edge part is connected to one side of the first plate body in a second direction; the second plate member further comprises a fourth frame edge part, the second frame edge part is connected to one side of the second plate body in the first direction, and the fourth frame edge part is connected to one side of the second plate body in the second direction; the third frame edge part is connected to the fourth frame edge part to form a second edge beam structure, and the second edge beam structure and the first edge beam structure jointly define the accommodating space, wherein the first direction and the second direction intersect with each other and are perpendicular to the stacking direction of the first plate member and the second plate member.

9. The case according to claim 8, wherein two first frame edge parts, two second frame edge parts, two third frame edge parts, and two fourth frame edge parts are provided; the two first frame edge parts are respectively disposed on two opposite sides of the first plate body in the first direction, the two second frame edge parts are respectively disposed on two opposite sides of the second plate body in the first direction, and the two first frame edge parts are disposed in one-to-one correspondence with the two second frame edge parts to form two first edge beam structures; the two third frame edge parts are respectively disposed on two opposite sides of the first plate body in the second direction, the two fourth frame edge parts are respectively disposed on two opposite sides of the second plate body in the second direction, and the two third frame edge parts are disposed in one-to-one correspondence with the two fourth frame edge parts to form two second edge beam structures; the two first edge beam structures and the two second edge beam structures define, in an enclosing manner, the accommodating space.

10. The case according to claim 8 or 9, wherein the third frame edge part comprises a third steel layer body, and the third steel layer body constitutes at least a part of the second edge beam structure.

11. The case according to claim 10, wherein the third frame edge part further comprises two third aluminum layer bodies connected to the first plate body, and the two third aluminum layer bodies cooperatively clamp the third steel layer body in the stacking direction of the first plate member and the second plate member.

12. The case according to any one of claims 8 to 11, wherein the fourth frame edge part comprises a fourth steel layer body, and the fourth steel layer body constitutes at least a part of the second edge beam structure.

13. The case according to claim 12, wherein the fourth frame edge part further comprises two fourth aluminum layer bodies connected to the second plate body, and the two fourth aluminum layer bodies cooperatively clamp the fourth steel layer body in the stacking direction of the first plate member and the second plate member.

14. The case according to any one of claims 1 to 13, wherein the case further comprises a third plate member disposed in a stacked manner between the first plate member and the second plate member, the third plate member comprises a third plate body and a fifth frame edge part connected to an edge side of the third plate body, and the fifth frame edge part extends to an inner cavity of the first edge beam structure and is connected between the first frame edge part and the second frame edge part.

15. The case according to claim 14, wherein the fifth frame edge part comprises a fifth steel layer body, and the fifth steel layer body extends to the inner cavity of the first edge beam structure.

16. The case according to claim 15, wherein the fifth frame edge part further comprises two fifth aluminum layer bodies connected to the third plate body, and the two fifth aluminum layer bodies cooperatively clamp the fifth steel layer body in the stacking direction of the first plate member and the second plate member.

17. The case according to any one of claims 14 to 16, wherein the third plate body is an aluminum plate.

18. The case according to any one of claims 14 to 17, wherein the second plate body is disposed on one side, facing away from the accommodating space, of the third plate member; one side, facing the third plate member, of the second plate body is provided with a gas guiding channel, the gas guiding channel is in communication with an external environment of the case, a through hole is formed at a junction between the first plate body and the third plate body, and the gas guiding channel is in communication with the accommodating space via the through hole.

19. The case according to any one of claims 14 to 18, wherein the first plate body is connected to the third plate body to form a heat exchange channel, and the heat exchange channel is configured to accommodate a heat exchange medium to adjust a temperature of the battery cell.

20. The case according to any one of claims 14 to 19, wherein
the first frame edge part is welded to the fifth frame edge part; and/or
the second frame edge part is welded to the fifth frame edge part.

21. A battery, wherein the battery comprises a battery cell and the case according to any one of claims 1 to 20, and the battery cell is accommodated in the accommodating space.

22. An electric device, wherein the electric device comprises the battery according to claim 21.
